# EUROPÄISCHE PATENTSCHRIFT

(11) **EP 0 708 748 B1**
(45) Veröffentlichungstag und Bekanntmachung des Hinweises auf die Patenterteilung: **15.01.1997**
(21) Anmeldenummer: 94920381.4
(22) Anmeldetag: 02.07.1994
(51) Int. Cl.: C05D 9/00, C05F 9/04, C05G 1/00, C05G 3/04

(54) **MISCHUNG ZUR ABDECKUNG UND/ODER REKULTIVIERUNG VON ABFALLDEPONIEN, BODENSENKUNGEN ODER ÄHNLICHEM**
MIXTURE FOR USE IN COVERING AND/OR RECULTIVATING WASTE DUMPS, SUBSIDENCE AREAS, ETC.
MELANGE SERVANT A RECOUVRIR ET/OU A RECULTIVER DES DECHARGES DE DECHETS, DES AFFAISSEMENTS DU SOL OU ANALOGUES

(30) Priorität: 15.07.1993 DE 4323633
(43) Veröffentlichungstag der Anmeldung: 01.05.1996
(73) Patentinhaber: W.U.R.M. GESELLSCHAFT ZUR WEITERVERARBEITUNG UNBEHANDELTER RÜCKSTANDS-MATERIALIEN, 41472 Neuss (DE)
(72) Erfinder: MEIER-STOLLE, Gereon, D-41747 Viersen (DE)
(74) Vertreter: Vomberg, Friedhelm, Dipl.-Phys.
(86) Internationale Anmeldenummer: DE9400775
(87) Internationale Veröffentlichungsnummer: WO9502565

(56) Entgegenhaltungen:
- DE-A- 3 731 267
- DE-A- 4 118 919
- DE-U- 9 216 212
- US-A- 5 106 405

## Beschreibung

Die Erfindung betrifft eine Mischung zu Abdeckung und/oder Rekultivierung von Abfalldeponien, Halden, Abgrabungen, Bodensenkungen und -vertiefungen oder kontaminierten Böden.

Abfalldeponien, Halden, Abgrabungen, Bodensenkungen und -vertiefungen oder auch künstlich aufgeschüttet Lärmschutzwälle sowie kontaminierte Böden benötigen eine Vegetationsschicht, die für Pflanzen ein rasches Anwachsen und eine zügige Weiterentwicklung an dem neuen Standort ermöglichen. Eine Abdeckung mit Humuserde ist zum einen sehr kostspielig, zum anderen auch bei Schräghängen nicht immer geeignet, da solche Humusaufträge leicht durch Wind abgeweht oder durch Wasser ausgetragen werden.

In der DE 41 18 919 A1 wird ein Verfahren zur Herstellung von nährstoffhaltigen Böden angegeben, bei dem organische und anorganische Bestandteile ganz oder teilweise mit einer Flüssigkeit durch Rollagglomeration granuliert werden, die Pflanzennährstoffe enthalten. Als feste organische Bestandteile sollen zerkleinerter Bauschutt, Sand oder Flugasche sowie Altpapier und Pappe mit einem Anteil von mindestens 20 Gew.-%, vorzugsweise 50 Gew.-% verwendet werden. Die organischen Bestandteile sollen aus dem Entsorgungsbereich eingesetzt werden, die Pflanzennährstoffe enthalten, wie Schlämme, Fäkalien, Gülle und anderes.

Die DE 37 31 267 A1 betrifft ein Verfahren zur Herstellung eines Bodenhilfsstoffes, bei dem als organische Stoffe solche aus der Müllaufbereitung und als Zusätze Tone und Nährhumus eingesetzt werden sollen.

Aufgabe der Erfindung ist es daher, eine Mischung der eingangs genannten Art zu schaffen, die als Vegetationsschicht brauchbar ist und Erosionen durch Wasser oder Wind genügend Widerstand entgegensetzen kann.

Diese Aufgabe wird durch eine Mischung nach Anspruch 1 gelöst, die aus einer oder mehreren organischen Komponenten zu 1 bis 3 Teilen von maximal 10 Teilen und einer oder mehreren mineralischen Komponenten aus 1 bis 3, vorzugsweise 2 Teilen von 2 bis maximal bis 10 Teilen besteht, wobei die organische Komponente aus mindestens einem Stoff der Gruppe Grünkompost, Biokompost und/oder Hausmüllkompost und die mineralische Komponente aus mindestens einem Stoff der Gruppe Sand, Erdaushub, recycelter Bauschutt, Feinkies und/oder Ziegelsplitt besteht, und Gehalte an Schlammstoff aus der Papier- und Zellstoffindustrie bis maximal 50 Vol.-%, vorzugsweise maximal 40 Vol.-%, des Gesamtvolumens oder einem Stoff aus der Textilfaserindustrie, vorzugsweise Baumwollkurzfasern.

Vorteilhafterweise ist eine aus einer solchen Mischung zusammengestellte Vegetationsdecke gegen Erosion durch Wasser oder Wind hinreichend stabil und mildert oder verhindert den Aggregatzerfall und das Verschlämmen des Substrates oder Bodens. Schließlich werden über die Mikrobenaktivität im Substrat in Verbindung mit den Wurzelexudaten der Pflanzen organische Säuren und Komplexbildner ausgeschieden, die abwärts gerichtete Verlagerungsprozesse deutlich erschweren bzw. hemmen.

Weitere Mischungsbestandteile nach der vorliegenden Erfindung sind in den Ansprüchen 2 bis 7 beschrieben.

So liegt die organische Komponente, die vorzugsweise im wesentlichen aus Grünkompost besteht, in einer Siebfraktion bis 24 mm, weiter vorzugsweise bis 10 mm vor. Soweit die organische Komponente Hausmüllkompost enthält, liegt dieser in einer Fraktion bis maximal 10 mm vor. Hierdurch werden Störstoffanteile von vornherein durch Siebung entfernt. Ggf. kann der organischen Fraktion Klärschlamm bis zu einem Anteil von maximal 20 Vol.-% beigemengt werden.

Die mineralische Komponente besteht bevorzugt aus Sand, Erdaushub und recyceltem Bauschutt in einer Siebfraktion von maximal 24 mm. Durch die mineralische Mischungskomponente wird die notwendige Gefügestabilität des Substratgemisches gewährleistet.

Nach einer weiteren Ausgestaltung der Erfindung kann eine Aufmischungskomponente in Form von aus der Papier- und Zellstoffindustrie stammendem Schlammstoff aus Papierholzfaser, vorzugsweise feucht und geflockt und/oder getrocknet und gekörnt und/oder aus einem Stoff aus der Textilfaserindustrie, wie insbesondere Baumwollkurzfasern, ausgewählt werden.

Der letztgenannte Schlammstoff als Aufmischungskomponente liegt etwa zu 1/3 bis 1/6 am Gesamtvolumen vor.

Zur Herstellung des Rekultivierungssubstrates wird ein Gemenge aus den drei vorgenannten Mischungskomponenten, nämlich der organischen Komponente, der mineralischen Komponente und der Aufmischungskomponente angesetzt. Die Ausgangsstoffe haben für die Herstellung eines weitgehend homogenen Substrates einen für die Verarbeitung optimalen Wassergehalt von 40 bis 60 % bzw. werden hierauf eingestellt. Im Hinblick auf die

Bindigkeit der Materialien untereinander zur Bildung stabiler Aggregate und zur Verhinderung von Entmischungseffekten sind folgende Mischungsverhältnisse - jeweils Volumenanteile - erfindungsgemäß zusammengestellt worden

| Organische Komponenten | Mineralische Komponenten | Aufmischungskomponenten |
|---|---|---|
| 1 | 1 | 1 |
| 2 | 1 | 1 |
| 1 | 2 | 1 |
| 3 | 2 | 1 |

Insbesondere bei gleichen Volumenanteilen der organischen, der mineralischen und der Aufmischungskomponente sind Substratgemische aus Grünkompost (Fertigkompost), Sand und Holzfaser geflockt oder auch Grünkompost (Frischkompost), Sand und geflockte Holzfaser verwendet werden.

In einem weiteren Beispiel wurden 2 Volumenanteile Grünkompost als Fertigkompost, 1 Teil Sand und 1 Teil Holzfaser vermengt.

In einem letzten Beispiel sind 3 Volumenanteile RRA-Kompost als Fertigkompost, 3 Teile Sand und 4 Teile geflockter Holzfaser gemengt worden. Die vorgenannten Mischungen wurden mit Erfolg zur nachhaltigen Rekultivierung von Berghängen, Halden, Deponien, Abgrabungen, Auffüllungen von Bodenvertiefungen sowie kontaminierten Standorten bis zu einer Hanglage von 45° eingesetzt.

## Patentansprüche

1. Mischung zur Abdeckung und/oder Rekultivierung von Abfalldeponien, Halden, Abgrabungen, Bodensenkungen und -vertiefungen oder kontaminierten Böden, bestehend aus einer organischen Komponente, einer mineralischen Komponente und einem Schlammstoff,
**dadurch gekennzeichnet,**
daß die organische Komponente zu 10 bis 33 1/3 Vol.-%, der Schlammstoff zu 16 1/3 bis 50 Vol.-%, vorzugsweise maximal 40 Vol.-%, Rest mineralische Komponente vorliegen und daß die organische Komponente aus mindestens einem Stoff der Gruppe Grünkompost, Biokompost und/oder Hausmüllkompost, die mineralische Komponente aus mindestens einem Stoff der Gruppe Sand, Erdaushub, recycelter Bauschutt, Feinkies und/oder Ziegelsplitt bestehen und der Schlammstoff aus der Papier- und Zellstoffindustrie oder Textilfaserindustrie stammt, vorzugsweise aus Baumwollkurzfasern besteht.

2. Mischung nach Anspruch 1, dadurch gekennzeichnet, daß die organische Komponente, die vorzugsweise im wesentlichen aus Grünkompost besteht, in einer Siebfraktion bis 24 mm, vorzugsweise bis 10 mm, vorliegt.

3. Mischung nach Anspruch 1 oder 2, dadurch gekennzeichnet, daß der in der organischen Komponente enthaltene Hausmüllkompost in einer Fraktion bis maximal 10 mm vorliegt.

4. Mischung nach einem der Ansprüche 1 bis 3, dadurch gekennzeichnet, daß der organischen Fraktion Klärschlamm bis zu einem Volumenanteil von 20 % beigemengt ist.

5. Mischung nach einem der Ansprüche 1 bis 4, dadurch gekennzeichnet, daß die mineralische Komponente in einer Siebfraktion bis maximal zu 24 mm vorliegt.

6. Mischung nach einem der Ansprüche 1 bis 5, dadurch gekennzeichnet, daß die Schlammstoffe aus Papierholzfaser, vorzugsweise feucht und geflockt und/oder getrocknet und gekörnt, bestehen.

7. Mischung nach einem der Ansprüche 1 bis 6, dadurch gekennzeichnet, daß der Schlammstoff etwa zu 1/3 bis 1/6 des Gesamtvolumens vorliegt.

## Claims

1. Combination consisting of an organical component, a mineral component and a sludge substance for covering and/or recultivating of refuse dumps, slopes, levels, ground lowerings and deepenings or contaminated grounds characterized in that the organical component exists from 10 to 33 1/3 Vol.-%, the sludge substance from 16 1/3 to 50 Vol.-%, preferably at most 40 Vol.-%, the rest there being mineral components and that the organical component exists at least of one substance belonging to the group of verdant compost, biocompost and/or household refuse compost, the mineral component at least of one substance of the group of sand, excavated earth, recycled rubble, fine gravel and/or crushed tiles and that the sludge substance comes from a paper and cellulose industry or a textile industry, preferably consisting of short cotton fibers.

2. Combination according to claim 1, characterized in that the organical component, preferably consisting essentially of verdant compost, being in a sieve fraction up to 24 mm, preferably up to 10 mm.

3. Combination according to claim 1 or 2, characterized in that the household refuse compost exists in a fraction up to at most 10 mm being also contained in the organical component.

4. Combination according to one of claims 1 to 3,
characterized in that sewage sludge up to 20 Vol.-% is admixed to the organical fraction.

5. Combination according to one of claims 1 to 4,
characterized in that the mineral component in a sieve fraction is to at most 24 mm.

6. Combination according to one of claims 1 to 5,
characterized in that the sludge substance exists of paper wood fibres, preferably moisty and flocky and/or dried and grainy.

7. Combination according to one of claims 1 to 6,
characterized in that the sludge substance exists of approximately 1/3 to 1/6 of the total volume.

## Revendications

1. Mélange servant à recouvrir et/ou à recultiver des décharges de déchets, des éboulis, des fossés, des affaissements du sol et des approfondissements du sol ou des sols contaminés, se composant d'un composant organique, d'un composant minéral et d'une matière de boue,
**caractérisé par le fait que**
le composant organique existe de 10 à 33 1/3 pourcent volumétrique, la matière de boue de 16 1/3 à 50 pourcent volumétrique, de préférence de 40 pourcent volumétrique au maximum et le reste est constitué par le composant minéral, et que le composant organique se compose d'une matière du moins du groupe compost vert, biocompost et/ou compost à base d'ordures ménagères, que le composant minéral se compose d'une matière du moins du groupe sable, déblais, décombres recyclés, gravier fin et/ou briques concassées et que la matière de boue provient de l'industrie du papier et de la cellulose technique ou de l'industrie de la fibre textile, et se compose de préférence de fibres courtes de coton.

2. Mélange selon la revendication 1, caractérisé par le fait que le composant organique, qui, de préférence, se compose pour l'essentiel de compost vert, est présent en une fraction granulométrique par tamisage jusqu'à 24 mm, de préférence jusqu'à 10 mm.

3. Mélange selon la revendication 1 ou 2, caractérisé par le fait que le compost à base d'ordures ménagères contenu dans le composant organique est présent en une fraction jusqu'à 10 mm au maximum.

4. Mélange selon l'une des revendications 1 à 3, caractérisé par le fait que l'on additionne à la fraction organique de la boue de curage jusqu'à une part de volume de 20%.

5. Mélange selon l'une des revendications 1 à 4, caractérisé par le fait que le composant minéral est présent en une fraction granulométrique par tamisage jusqu'à 24 mm au maximum.

6. Mélange selon l'une des revendications 1 à 5, caractérisé par le fait que les matières de boue se composent de fibre de bois de papier, de préférence humide et floconnée et/ou séchée et granulée.

7. Mélange selon l'une des revendications 1 à 6, caractérisé par le fait que la matière de boue existe à peu près de 1/3 jusqu'à 1/6 du volume total.
